# EUROPEAN PATENT APPLICATION

(11) **EP 4 750 125 A1**
(43) Date of publication of application: **27.05.2026**
(21) Application number: 24850636.2
(22) Date of filing: 24.05.2024
(51) Int. Cl.: H04W 24/02

(54) **COMMUNICATION METHOD AND COMMUNICATION APPARATUS**

(30) Priority: 08.08.2023 CN 202310993463
(71) Applicant: HUAWEI TECHNOLOGIES CO., LTD., Shenzhen, Guangdong 518129 (CN)
(72) Inventor: CHENG, Wenjie, Shenzhen, Guangdong 518129 (CN); ZENG, Yu, Shenzhen, Guangdong 518129 (CN); GENG, Tingting, Shenzhen, Guangdong 518129 (CN)
(74) Representative: Maiwald GmbH
(86) International application number: PCT/CN2024/095185
(87) International publication number: WO 2025/030984

(57) **Abstract**

This application provides a communication method and a communication apparatus. The method provides a solution that can effectively increase a probability that a first device receives expected prediction information. The method includes: A first device sends a first message used to request prediction information to a second device, where the first message includes first time configuration information configured by the first device for the prediction information; and the second device sends, to the first device, a second message including second time configuration information supported by the second device for the first prediction information, where the first time configuration information is different from the second time configuration information.

## Description

This application claims priority to Chinese Patent Application No. 202310993463.1, filed with the China National Intellectual Property Administration on August 8, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

Artificial intelligence (artificial intelligence, AI) is a technology in which complex computing is performed by simulating a human brain. With the improvement of data storage and computing capabilities, the 3rd generation partnership project (3rd generation partnership project, 3GPP) proposes to apply the AI to a wireless communication network to improve network performance and user experience. For example, the AI can be used in the following scenarios: network energy saving, load balancing, mobility optimization, and the like.

Devices in the wireless communication network may exchange prediction information (or AI information). For example, a first device may send a prediction information request message to a second device, where the prediction information request message is used to request one piece of prediction information. The prediction information request message includes time configuration information configured by the first device for the prediction information. The second device sends a prediction information response message to the first device, where the prediction information response message is used to respond to the prediction information request message.

However, when the second device does not support the time configuration information configured by the first device for the prediction information, the second device does not send the prediction information to the first device. As a result, a probability that the first device receives expected prediction information based on the foregoing procedure is low. Therefore, how to effectively increase the probability that the first device receives the expected prediction information is an urgent technical problem to be resolved currently.

### SUMMARY

This application provides a communication method and a communication apparatus, to effectively increase a probability that a first device receives expected prediction information.

According to a first aspect, a communication method is provided, including: sending a first message to a second device, where the first message is used to request first prediction information, and the first message includes first time configuration information configured by the first device for the first prediction information; and receiving a second message from the second device, where the second message includes second time configuration information supported by the second device for the first prediction information, and the first time configuration information is different from the second time configuration information.

The solution in the first aspect may be performed by the first device, or may be performed by a chip, an integrated circuit, or the like configured to perform a function of the first device. For ease of description, the following uses the first device as an example for description.

Specifically, the first device may obtain the time configuration information supported by the second device by exchanging the time configuration information with the second device. When determining that the second time configuration information is different from the first time configuration information, the first device may determine whether to continue to obtain the prediction information. For example, the first device may determine to continue to obtain the prediction information, and may selectively apply the prediction information, or the first device may indicate the second device to send or obtain the prediction information based on the second time configuration information. Compared with a solution in which the second device does not send the prediction information to the first device because the second time configuration information is different from the first time configuration information, the foregoing solution may enable the first device to have an initiative to determine whether to continue to obtain the prediction information. Therefore, a probability that the first device receives expected prediction information can be effectively increased.

For example, when the time configuration information supported by the second device is different from the time configuration information configured by the first device, the first device may adjust the time configuration information supported by the second device to the time configuration information configured for the prediction information, so that the time configuration information configured by the first device for the prediction information is consistent with the time configuration information supported by the second device for the prediction information. Therefore, the second device can continue to send the prediction information to the first device.

In some implementations of the first aspect, the method further includes: sending a third message to the second device, where the third message is used to respond to the second message; and receiving the first prediction information from the second device, where the first prediction information corresponds to the second time configuration information.

Specifically, the third message may indicate that the first device agrees that the second device obtains or sends the first prediction information based on the second time configuration information. Correspondingly, the second device may send the first prediction information to the first device based on the second time configuration information.

In some implementations of the first aspect, the method further includes: receiving first indication information from the second device, where the first indication information indicates that the first prediction information is invalid in a first time, and the first time is a second valid time or a second report period.

In this way, the first device can determine, in a timely manner, that the obtained first prediction information includes invalid prediction information, so that the first device can be prevented from generating an invalid AI policy based on the invalid prediction information, thereby improving AI service precision of the first device.

In some implementations of the first aspect, the method further includes: receiving second prediction information from the second device, where the second prediction information is used to update the invalid prediction information in the first prediction information.

In this way, the first device may update or replace the invalid prediction information in the first prediction information with the second prediction information.

In some implementations of the first aspect, the method further includes: sending second indication information, where the second indication information indicates that signaling related to the first prediction information is invalid.

In this way, a device that interacts with the first device can be prevented from performing a communication operation through the signaling related to the first prediction information.

According to a second aspect, a communication method is provided, including: receiving a first message from a first device, where the first message is used to request first prediction information, and the first message includes first time configuration information configured by the first device for the first prediction information; and sending a second message to the first device, where the second message includes second time configuration information supported by a second device for the first prediction information, and the first time configuration information is different from the second time configuration information.

The solution in the second aspect may be performed by the second device, or may be performed by a chip, an integrated circuit, or the like configured to perform a function of the second device. For ease of description, the following uses the second device as an example for description.

Specifically, the second device may notify the first device of the time configuration information supported by the second device for the first prediction information, so that the first device can have an initiative to determine whether to continue to obtain the prediction information. Therefore, a probability in which the first device receives the prediction information can be effectively increased.

In some implementations of the second aspect, the method further includes: receiving a third message from the first device, where the third message is used to respond to the second message; and sending the first prediction information to the first device, where the first prediction information corresponds to the second time configuration information.

Specifically, the third message may indicate that the first device agrees that the second device obtains or sends the first prediction information based on the second time configuration information. Correspondingly, the second device may send the first prediction information to the first device based on the second time configuration information.

In some implementations of the second aspect, the method further includes: sending first indication information to the first device, where the first indication information indicates that the first prediction information is invalid in a first time, and the first time is a second valid time or a second report period.

In this way, the first device can determine, in a timely manner, that the obtained first prediction information includes invalid prediction information, so that the first device can be prevented from generating an invalid AI policy based on the invalid prediction information, thereby improving AI service precision of the first device.

In some implementations of the second aspect, the method further includes: sending second prediction information to the first device, where the second prediction information is used to update the invalid prediction information in the first prediction information.

In this way, the first device may update or replace the invalid prediction information in the first prediction information with the second prediction information.

With reference to the solution according to any one of the first aspect or the second aspect, the second message further includes the first prediction information, and the first prediction information corresponds to the second time configuration information.

In this way, a case in which the second device cannot send the prediction information to the first device because the second device does not support the first time configuration information can be avoided, so that the first device can increase a probability of obtaining the first prediction information.

With reference to the solution according to any one of the first aspect or the second aspect, the first time configuration information includes one or more of the following: a first valid time, a requested prediction time, a first report time, or a first report period.

With reference to the solution according to any one of the first aspect or the second aspect, the second time configuration information includes one or more of the following: a second valid time, a second report time, an effective time, or a second report period.

According to a third aspect, a communication apparatus is provided. The communication apparatus may be a first device, or may be a device, a module, or the like configured to perform a function of the first device.

In a possible implementation, the communication apparatus may include modules or units that are in one-to-one correspondence with the method/operations/steps/actions described in the first aspect. The module or unit may be implemented by a hardware circuit, software, or a combination of a hardware circuit and software.

According to a fourth aspect, a communication apparatus is provided. The communication apparatus may be a second device, or may be a device, a module, or the like configured to perform a function of the second device.

In a possible implementation, the communication apparatus may include modules or units that are in one-to-one correspondence with the method/operations/steps/actions described in the second aspect. The module or unit may be implemented by a hardware circuit, software, or a combination of a hardware circuit and software.

According to a fifth aspect, a communication apparatus is provided, including a processor. The processor is configured to cause, by executing a computer program or instructions or through a processing circuit, the communication apparatus to perform the method according to any one of the first aspect and the possible implementations of the first aspect, or the communication apparatus to perform the method according to any one of the second aspect and the possible implementations of the second aspect.

In a possible implementation, the communication apparatus further includes a memory, configured to store the computer program or the instructions.

In a possible implementation, the communication apparatus further includes a communication interface, configured to input and/or output a signal.

According to a sixth aspect, a communication apparatus is provided, including a processing circuit and an input/output interface. The input/output interface is configured to input and/or output a signal, and the processing circuit is configured to perform the method according to any one of the first aspect and the possible implementations of the first aspect, or the processing circuit is configured to perform the method according to any one of the second aspect and the possible implementations of the second aspect.

According to a seventh aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed.

According to an eighth aspect, a computer program product is provided, including instructions. When the instructions are run on a computer, the method according to any one of the first aspect and the possible implementations of the first aspect is performed, or the method according to any one of the second aspect and the possible implementations of the second aspect is performed.

For descriptions of beneficial effect of any one of the third aspect to the eighth aspect, refer to the descriptions of beneficial effect of the first aspect and the second aspect.

### BRIEF DESCRIPTION OF DRAWINGS

FIG. 1 is a diagram of an application framework 100 in a communication system according to an embodiment of this application;
FIG. 2 is a diagram of an application framework 200 in a communication system according to an embodiment of this application;
FIG. 3 is a diagram of a communication system 300 to which an embodiment of this application is applicable;
FIG. 4 is a diagram of a communication system 400 to which an embodiment of this application is applicable;
FIG. 5 is a schematic interaction flowchart of a communication method 500 according to an embodiment of this application;
FIG. 6 is a diagram of a relationship between prediction information 1 and time configuration information 1;
FIG. 7 is a schematic interaction flowchart of a communication method 700 according to an embodiment of this application;
FIG. 8 is a schematic interaction flowchart of a communication method 800 according to an embodiment of this application;
FIG. 9 is a schematic interaction flowchart of a communication method 900 according to an embodiment of this application;
FIG. 10 is a block diagram of a communication apparatus 1000 according to an embodiment of this application; and
FIG. 11 is a block diagram of a communication apparatus 1100 according to an embodiment of this application.

### DESCRIPTION OF EMBODIMENTS

For ease of understanding embodiments of this application, the following descriptions are provided first.
1. In this application, unless otherwise specified, "a plurality of" means two or more.
2. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
3. Various numbers in this application are merely used for differentiation for ease of description, but are not intended to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other term numerals (if existent) are used for distinguishing between similar objects, but do not necessarily indicate a specific order or sequence. Data used in such a way is interchangeable in appropriate circumstances, so that embodiments described herein can be implemented in other orders than the order illustrated or described herein.
   In addition, any embodiment or design solution described as an "example" or "for example" in this application should not be explained as being more preferred or having more advantages than another embodiment or design solution. Exactly, use of the terms such as "example" or "for example" is intended to present a related concept in a specific manner for ease of understanding.
4. The terms "include", "have", and any variants thereof are intended to cover a non-exclusive inclusion. For example, a process, a method, a system, a product, or a device that includes a series of steps or units is not necessarily limited to those expressly listed steps or units, but may include other steps or units not expressly listed or inherent to such a process, method, product, or device.
5. In this application, "indicate" may be understood as "enable", and "enable" may include "directly enable" and "indirectly enable". When a piece of information is described to enable A, the information may directly enable A or indirectly enable A, but it does not mean that the information definitely carries A.
   Information enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, so as to reduce enabling overheads to some extent. In addition, a common part of all information may be identified and enabled in a unified manner, to reduce enabling overheads caused by enabling the same information separately.
6. In this application, "preconfigure" may include predefine, for example, define in a protocol. The "predefine" may be implemented by prestoring, in a device (for example, including network elements), corresponding code, a corresponding table, or other related information that may be used for indication. A specific implementation thereof is not limited in this application.
7. "Storage" or "store" in this application may mean "being stored" in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited.
8. A "protocol" related in this application may be a standard protocol in the communication field, for example, may include a 4th generation (4th generation, 4G) network protocol, a 5th generation (5th generation, 5G) network protocol, a new radio (new radio, NR) protocol, a 5.5G network protocol, a 6th generation (6th generation, 6G) network protocol, and related protocols used in future communication systems. This is not limited in this application.
9. Arrows or blocks shown by dashed lines in diagrams of the accompanying drawings in this specification of this application indicate optional steps or optional modules.
10. In this application, unless otherwise specified, "/" indicates an "or" relationship between associated objects. For example, A/B may indicate A or B. "And/or" in this application describes only an association relationship for describing associated objects and indicates that three relationships may exist. For example, A and/or B may indicate the following three cases: Only A exists, both A and B exist, and only B exists, where A and B may be singular or plural.

First, a communication system to which an embodiment of this application is applicable is described by using an example.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a 6th generation (6th generation, 6G) mobile communication system, or a system integrating a plurality of systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A network element in the communication system may send a signal to another network element or receive a signal from another network element. The signal may include information, signaling, data, and the like. The network element may alternatively be replaced with an entity, a network entity, a device, a communication device, a communication module, a node, a communication node, a core network device, or the like. In embodiments of this application, the network element is used as an example for description. For example, the communication system may include at least one terminal device and at least one network device. The network device may send a downlink signal to the terminal device, and/or the terminal device may send an uplink signal to the network device. It may be understood that, the terminal device in embodiments of this application may be replaced with a first network element, the network device may be replaced with a second network element, and the terminal device and the network device perform a corresponding communication method in embodiments of this application.

The terminal device in embodiments of this application may also be referred to as user equipment (user equipment, UE), an access terminal, a subscriber unit, a subscriber station, a mobile station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device with a wireless connection function. Currently, some examples of a terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile communication network (public land mobile network, PLMN), or the like. This is not limited in embodiments of this application.

By way of example but not limitation, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device may be the terminal device, or may be an apparatus that can support the terminal device in implementing the function, such as a chip system, where the apparatus may be installed in the terminal device or used in matching with the terminal device. In embodiments of this application, the chip system may include a chip, or may include a chip and another discrete component. In embodiments of this application, an example in which the apparatus configured to implement the function of the terminal device is a terminal device is merely used for description, and constitutes no limitation on the solutions in embodiments of this application.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover any of the following names in a broad sense, or may be replaced with the following names: for example, a NodeB (NodeB), an evolved NodeB (evolved NodeB, eNB), a next generation NodeB (next generation NodeB, gNB), a relay station, an access point, a transmission point (transmission and reception point, TRP), a transmission point (transmission point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network-side device in a 6G network, a device that bears a base station function in a future communication system, or the like. The base station may support networks in using a same access technology or different access technologies. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a CU control plane (central unit-control plane (central unit-control plane, CU-CP)) node, a CU user plane (central unit-user plane (central unit-user plane, CU-UP)) node, and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes respectively implement a part of functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more categories of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, relative to the CPRI, a part of downlink and/or uplink baseband functions, for example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, different manners of splitting the DU and the RU correspond to different categories (categories, Cats) of eCPRIs, for example, eCPRI Cats A, B, C, D, E, and F.

The eCPRI Cat A is used as an example. For downlink transmission, layer mapping is used as a split. The DU is configured to implement layer mapping and one or more previous functions (to be specific, one or more of coding, rate matching, scrambling, modulation, and layer mapping), and another function (for example, one or more of RE mapping, BF, or IFFT/CP) after the layer mapping is removed to the RU for implementation. For uplink transmission, splitting is performed at RE demapping. The DU is configured to implement the demapping and one or more functions before the demapping (to be specific, one or more of the following functions: decoding, de-rate matching, descrambling, demodulation, inverse discrete Fourier transform (inverse discrete Fourier transform, IDFT), channel equalization, and the RE demapping), and other functions (for example, one or more of digital BF or fast Fourier transform (FFT)/CP removal) after the demapping are moved to the RU for implementation. It may be understood that, for function descriptions of DUs and RUs corresponding to various categories of eCPRIs, refer to an eCPRI protocol. Details are not described herein.

In a possible design, a processing unit configured to implement a baseband function in the BBU is referred to as a baseband high (baseband high, BBH) unit, and a processing unit configured to implement a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be a network device, or an apparatus that can support the network device in implementing the function, for example, a chip system, a hardware circuit, a software module, or a combination of a hardware circuit and a software module. The apparatus may be installed in the network device or used in matching with the network device. In embodiments of this application, an example in which the apparatus configured to implement the function of the network device is a network device is merely used for description, and constitutes no limitation on the solutions in embodiments of this application.

The network device and/or the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiments of this application. In addition, the terminal device and the network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In a wireless communication network, for example, in a mobile communication network, services supported by the network are increasingly diversified, and therefore requirements that need to be met are increasingly diversified. For example, the network needs to be capable of supporting an ultra-high rate, an ultra-low latency, and/or massive connections. This feature makes network planning, network configuration, and/or resource scheduling increasingly complex. In addition, because the network has increasingly powerful functions, for example, supports an increasingly high spectrum and supports new technologies such as a higher-order multiple-input multiple-output (multiple-input multiple-output, MIMO), beamforming, and/or beam management, network energy saving becomes a hot research topic. These new requirements, scenarios, and features cause unprecedented challenges to network planning, operation and maintenance, and efficient operation. To address the challenges, an artificial intelligence technology may be introduced into the wireless communication network to implement network intelligence.

To support AI technologies in a wireless network, an AI node may be further introduced into the network.

Optionally, the AI node may be deployed at one or more of the following positions in the communication system: an access network device, a terminal device, a core network device, or the like. Alternatively, the AI node may be independently deployed, for example, deployed at a position other than any one of the foregoing devices, for example, a host or a cloud server in an over the top (over the top, OTT) system. The AI node may communicate with another device in the communication system. For example, the another device may be one or more of the following: a network device, a terminal device, or a network element of a core network.

It may be understood that, a quantity of AI nodes is not limited in embodiments of this application. For example, when there are a plurality of AI nodes, the plurality of AI nodes may be divided based on functions. For example, different AI nodes are responsible for different functions.

It may be further understood that, the AI nodes may be independent devices, may be integrated into a same device to implement different functions, may be network elements in a hardware device, may be software functions running on dedicated hardware, or may be virtualized functions instantiated on a platform (for example, a cloud platform). A specific form of the AI node is not limited in this application. The AI node may be an AI network element or an AI module.

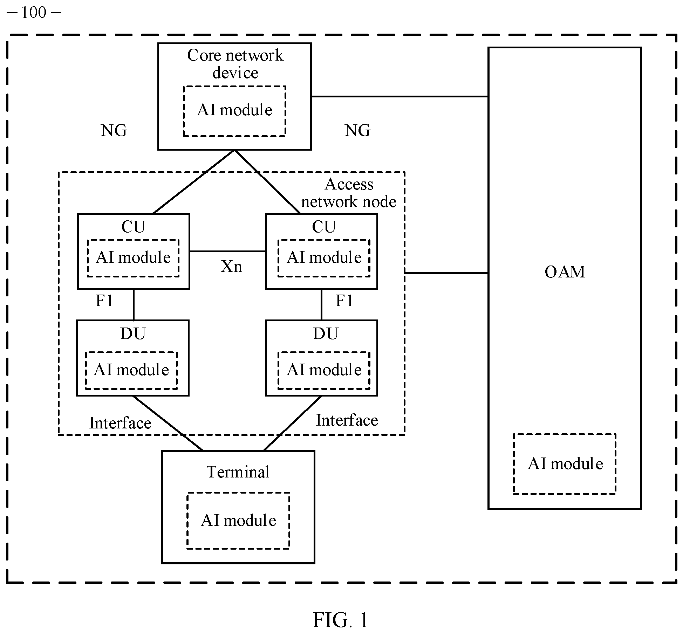

FIG. 1 is a diagram of an application framework 100 in a communication system according to an embodiment of this application. As shown in FIG. 1, network elements in the communication system are connected through an interface (for example, NG or Xn) or an air interface. One or more AI modules (for clarity, FIG. 1 shows only one AI module) are disposed in one or more of these network element nodes, such as a core network device, an access network node (RAN node), a terminal, or operations, administration, and maintenance (operations, administration, and maintenance, OAM). The access network node may be used as an independent RAN node, or may include a plurality of RAN nodes, for example, include a CU and a DU. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of a quantity of neural network layers, a width of a neural network, a connection relationship between layers, a weight of a neuron, an activation function of a neuron, or a bias in an activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One model may obtain an output through inference, and the output includes one or more parameters. Learning processes, training processes, or inference processes of different models may be deployed on different nodes or devices, or may be deployed on a same node or device.

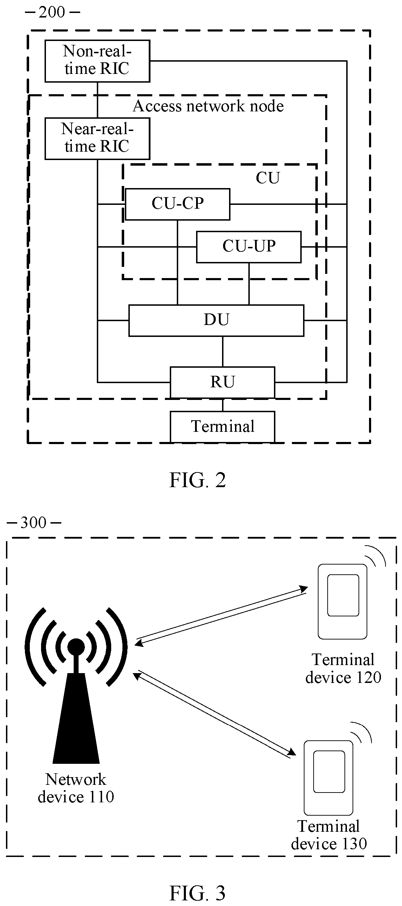

FIG. 2 is a diagram of an application framework 200 in a communication system according to an embodiment of this application. As shown in FIG. 2, the communication system includes a RAN intelligent controller (RAN intelligent controller, RIC). For example, the RIC may be the AI module shown in FIG. 1, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, latency-insensitive data. A latency of the data may be several seconds. A real-time RIC mainly processes near-real-time information, for example, latency-sensitive data. A latency of the data is tens of milliseconds.

The near-real-time RIC is configured to perform model training and inference, for example, is configured to train an AI model and perform inference by using the AI model. The near-real-time RIC may obtain information on a network side and/or a terminal side from the RAN node (for example, a CU, a CU-CP, a CU-UP, a DU, and/or an RU) and/or the terminal. The information may be used as training data or inference data. Optionally, the near-real-time RIC may deliver an inference result to the RAN node and/or the terminal. Optionally, an inference result may be exchanged between the CU and the DU and/or between the DU and the RU. For example, the near-real-time RIC delivers an inference result to the DU, and the DU sends the inference result to the RU.

The non-real-time RIC is also configured to perform model training and inference, for example, is configured to train an AI model and perform inference by using the model. The non-real-time RIC may obtain information on a network side and/or a terminal side from the RAN node (for example, a CU, a CU-CP, a CU-UP, a DU, and/or an RU) and/or the terminal. The information may be used as training data or inference data, and an inference result may be delivered to the RAN node and/or the terminal. Optionally, an inference result may be exchanged between the CU and the DU and/or between the DU and the RU. For example, the non-real-time RIC delivers an inference result to the DU, and the DU sends the inference result to the RU.

The near-real-time RIC and the non-real-time RIC each may alternatively be independently disposed as a network element. Optionally, the near-real-time RIC and the non-real-time RIC may alternatively serve as a part of another device. For example, the near-real-time RIC is deployed on the RAN node (for example, the CU or the DU), and the non-real-time RIC is deployed on an OAM, a cloud server, a core network device, or another network device.

FIG. 3 is a diagram of a communication system 300 to which an embodiment of this application is applicable. As shown in FIG. 3, the communication system 300 may include at least one network device, for example, a network device 110. The communication system 100 may further include at least one terminal device, for example, a terminal device 120 and a terminal device 130. The network device 110 may communicate with the terminal device (for example, the terminal device 120 and the terminal device 130) through a radio link. Communication devices, for example, the network device 110 and the terminal device 120, in the communication system may communicate with each other by using a multiple-antenna technology.

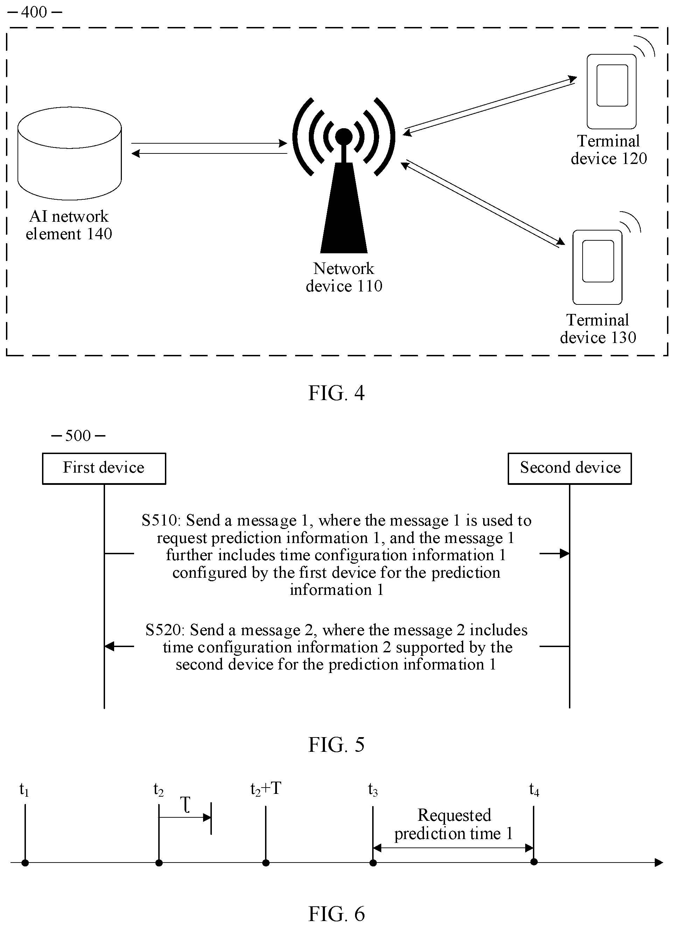

FIG. 4 is a diagram of a communication system 400 to which an embodiment of this application is applicable. Compared with the communication system 300, the communication system 400 further includes an AI network element 140. The AI network element 140 is configured to perform an AI-related operation, for example, constructing a training dataset or training an AI model.

In a possible implementation, the network device 110 may send data related to training of the AI model to the AI network element 140, and the AI network element 140 constructs the training dataset and trains the AI model. For example, the data related to training of the AI model may include data reported by the terminal device. The AI network element 140 may send a result of an operation related to the AI model to the network device 110, and the network device 110 forwards the result of the operation related to the AI model to the terminal device. For example, the result of the operation related to the AI model may include at least one of the following: a trained AI model, an evaluation result or a test result for the model, and the like. For example, a part of the trained AI model may be deployed on the network device 110, and the other part is deployed on the terminal device. Alternatively, the trained AI model may be deployed on the network device 110. Alternatively, the trained AI model may be deployed on the terminal device.

In FIG. 4, that the AI network element 140 is directly connected to the network device 110 is used merely as an example for description. In another scenario, the AI network element 140 may alternatively be connected to the terminal device. Alternatively, the AI network element 140 may be connected to both the network device 110 and the terminal device. Alternatively, the AI network element 140 may be connected to the network device 110 via a third-party network element. A connection relationship between the AI network element and another network element is not limited in this application.

The AI network element 140 may alternatively be disposed on a network device and/or a terminal device as a module, for example, disposed on the network device 110 or the terminal device shown in FIG. 3.

It should be noted that, FIG. 3 and FIG. 4 are merely simplified diagrams of examples for ease of understanding. For example, the communication system may further include another device, for example, may further include a wireless relay device and/or a wireless backhaul device, which are/is not shown in FIG. 3 and FIG. 4. In actual application, the communication system may include a plurality of network devices (for example, the network device 110 and a network device 150 (not shown in FIG. 3)), or may include a plurality of terminal devices. Quantities of network devices and terminal devices included in the communication system are not limited in this application.

In embodiments of this application, an indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

In embodiments of this application, that information C is for determining information D includes that the information D is determined based on only the information C, and the information D is determined based on the information C and other information. In addition, that information C is used to determine information D may further include an indirect determining case. For example, the information D is determined based on information E, and the information E is determined based on the information C.

In addition, that "a network element A (which may be a device A) sends information A to a network element B (which may be a device B)" in embodiments of this application may be understood as that a destination end of the information A or an intermediate network element in a transmission path to the destination end is the network element B, and may include directly or indirectly sending the information to the network element B. That "a network element B receives information A from a network element A" may be understood as that a source end of the information A or an intermediate network element in a transmission path from the source end is the network element A, and may include directly or indirectly receiving information from the network element A. Information may undergo necessary processing, for example, a format change, between the source end and the destination end of information sending. However, the destination end may understand valid information from the source end. Similar descriptions in this application may be understood similarly, and details are not described herein.

To resolve the technical problem mentioned in the background, this application provides a communication method and a communication apparatus, so that prediction information exchanged between a requesting device and a requested device can meet a requirement of the requesting device.

For ease of description, the following uses a first device (which may be understood as the requesting device) and a second device (which may be understood as the requested device) as an example for description. Both the first device and the second device may be network devices, or both may be terminal devices, or both may be core network devices; or one is a network device, and the other is a terminal device; or one is a network device, and the other is a core network device; or one is a terminal device, and the other is a core network device. This is not limited. In addition, the first device may alternatively be a network element A, and the second device may alternatively be a network element B. This is not limited.

FIG. 5 is a schematic interaction flowchart of a communication method 500 according to an embodiment of this application. The method 500 may be performed by a first device and a second device, or may be performed by a module and/or a component (for example, a chip or an integrated circuit) that are installed in a first device and a second device and that have a corresponding function. This is not limited. The following uses the first device and the second device as an example for description. As shown in FIG. 5, the method 500 includes the following steps.

S510: The first device sends a message 1 (for example, a first message) to the second device, where the message 1 is used to request prediction information 1 (for example, first prediction information), and the message 1 includes time configuration information 1 (for example, first time configuration information) configured by the first device for the prediction information 1.

Correspondingly, the second device receives the message 1.

Specifically, the prediction information 1 may include but is not limited to: parameters such as a radio resource status, an activated UE quantity, a quantity of radio resource control (radio resource control, RRC) connections, an average UE downlink throughput, an average UE uplink throughput, an average data packet delay, and an average data packet loss.

For example, the prediction information 1 is the activated UE quantity parameter. The first device sends, to the second device, a message 1 used to request to obtain the activated UE quantity parameter. The time configuration information 1 is information associated with the prediction information 1. For example, the prediction information 1 is the activated UE quantity parameter, and the time configuration information 1 may indicate a prediction time corresponding to the activated UE quantity parameter. For example, the first device indicates, to the second device based on the time configuration information 1, that the first device expects to obtain an activated UE quantity parameter that is in a future time period. Correspondingly, the second device may determine, based on the time configuration information 1, that the first device needs to obtain the activated UE quantity parameter that is in the time period.

In a possible implementation, the time configuration information 1 may include but is not limited to: a requested prediction time 1, a report time 1 (for example, a first report time), a report period interval 1 (for example, a first report period interval), and a valid time 1 (for example, a first valid time). The time configuration information 1 may include one or more parameters listed above. This is not limited.

Specifically, the requested prediction time 1 is a prediction time corresponding to the prediction information 1. For example, the requested prediction time 1 is a time period [9:00, 9:30], and the first device requests to obtain an activated UE quantity parameter that is in the time period [9:00, 9:30]. The report time 1 is a time at which the second device sends the prediction information 1 to the first device. The report period interval 1 is an interval between two report times at which the second device periodically sends the prediction information 1 to the first device. The valid time 1 indicates a time period in which the first device expects the prediction information 1 to be valid. In the time period, the prediction information 1 is valid, and outside the time period, the prediction information 1 is invalid. For example, a valid time indicated by the valid time 1 is a time period after the first device receives the prediction information 1 (refer to descriptions in FIG. 6). In the time period, the prediction information 1 is valid, and outside the time period, the prediction information 1 is invalid. For descriptions of the prediction information 1 and the time configuration information 1, refer to FIG. 6.

FIG. 6 is a diagram of a relationship between the prediction information 1 and the time configuration information 1. As shown in FIG. 6, the time configuration information 1 may include the requested prediction time 1, the report period interval 1, and the valid time 1. Specifically, a sending time of the message 1 is t₁, a receiving time (which is the foregoing report time 1) of the prediction information 1 is t₂, the report period interval 1 is T, the valid time 1 is 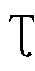 , and the requested prediction time 1 is [t₃, t₄]. A time length of the valid time 1 may be less than or equal to the report period interval 1.

For example, the first device sends the message 1 to the second device at a moment 8:35 (corresponding to t₁), where the message 1 is used to request the activated UE quantity parameter that is in the time period [9:00, 9:30] (corresponding to [t₃, t₄]). The second device sends the activated UE quantity parameter that is in the time period [9:00, 9:30] to the first device at a moment 8:50 (corresponding to t₂). The activated UE quantity parameter that is in the time period [9:00, 9:30] is valid in a time period [8:50, 8:59] (corresponding to 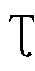 ).

In a possible implementation, the report time 1 may indicate a sending moment of the prediction information 1, for example, a moment 8:50, or may indicate a sending time range of the prediction information 1, for example, a time period [8:40, 8:55], or may indicate a time difference between the report time 1 and a sending time of a message 2, for example, 10 min; or may indicate a time difference between the report time 1 and the requested prediction time 1, for example, -20 min. This is not limited. The second device may send the prediction information 1 to the first device at the indicated report time, so that the first device can be prevented from receiving the prediction information 1 too early or too late, and the first device can obtain continuous, effective, and as accurate as possible prediction information 1, thereby improving AI service precision of the first device.

In this embodiment of this application, a parameter in the time configuration information 1 may be indicated by using an index. For example, the time configuration information 1 includes an index 1 and an index 2, the index 1 is associated with the requested prediction time 1, and the index 2 is associated with the report time 1. In this way, signaling overheads can be reduced. In addition, the time configuration information 1 may also be indicated by using an index. For example, the time configuration information 1 is associated with an index 1, and the index 1 indicates one or more parameters listed above in the time configuration information 1. In this way, signaling overheads can be reduced.

S520: The second device sends the message 2 to the first device, where the message 2 includes time configuration information 2 (for example, second time configuration information) supported by the second device for the prediction information 1.

Correspondingly, the first device receives the message 2.

Specifically, that the second device supports the time configuration information 2 for the prediction information 1 may be understood as that, for the prediction information 1, the second device has a time configuration supported by the second device. The time configuration supported by the second device for the prediction information 1 may be different from a time configuration configured by the first device for the prediction information 1, or may be the same as a time configuration configured by the first device for the prediction information 1.

In a possible implementation, the time configuration information 2 may include but is not limited to: an effective time 1, a report time 2 (for example, a second report time), a report period interval 2 (for example, a second report period), and a valid time 2 (for example, a second valid time). The time configuration information 2 may include one or more parameters listed above. This is not limited herein.

Specifically, the effective time 1 is a time actually corresponding to the prediction information 1. For example, the requested prediction time 1 is a time period [9:00, 9:30], and the effective time 1 may be a time period [9:00, 9:20]. That is, the prediction information 1 sent by the second device to the first device corresponds to the time period [9:00, 9:20] instead of the time period [9:00, 9:20], and the effective time 1 is less than or equal to the requested prediction time 1 (or may be greater than the requested prediction time 1, which is not limited). For descriptions of the report time 2, the report period interval 2, and the valid time 2, refer to the foregoing descriptions. Details are not described again.

In a possible implementation, the effective time 1 may indicate a time range, for example, a time period [9:00, 9:20]; or may indicate time information related to the requested prediction time 1, for example, a time difference between the effective time 1 and a start time point (a moment 9:00) of the requested prediction time 1, for example, 20 min, or a time difference between the effective time 1 and an end time point (a moment 9:30) of the requested prediction time 1, for example, -10 min, or a time difference between the effective time 1 and a start time point of the requested prediction time 1 and a time difference between the effective time 1 and an end time point of the requested prediction time 1 is, for example, [0, -10] min.

In this embodiment of this application, that the time configuration information 1 is different from the time configuration information 2 may be that a value of one or more parameters in the time configuration information 1 is different from a value of one or more parameters in the time configuration information 2. For example, the time configuration information 1 includes the valid time 1 and the report period interval 1, and the time configuration information 2 includes the valid time 2 and the report period interval 2. That the time configuration information 1 is different from the time configuration information 2 may be that the valid time 1 is different from the valid time 2, and the report period interval 1 is the same as the report period interval 2; or the report period interval 1 is different from the report period interval 2, and the valid time 1 is the same as the valid time 2; or the valid time 1 is different from the valid time 2, and the report period interval 1 is different from the report period interval 2; or the like. For another example, the time configuration information 1 includes the valid time 1 and the report period interval 1, and the time configuration information 2 includes the report period interval 2. That the time configuration information 1 is different from the time configuration information 2 may be that the valid time 1 is different from the valid time 2; or the valid time 1 is the same as the valid time 2, but the second device does not support the report period interval 1; or the like. It may be understood that the foregoing description is merely used as an example description in which the time configuration information 1 is different from the time configuration information 2, and may further include other descriptions. This is not limited. It should be noted that the valid time 1 and the valid time 2 may be used as example descriptions of prediction precision of the prediction information 1, and other possible descriptions are not limited.

In this embodiment of this application, a parameter in the time configuration information 2 may be indicated by using an index. For example, the time configuration information 1 includes an index 3 and an index 4, the index 4 is associated with the effective time 1, and the index 2 is associated with the report time 2. In this way, signaling overheads can be reduced. In addition, the time configuration information 2 may also be indicated by using an index. For example, the time configuration information 2 is associated with an index 3, and the index 3 indicates one or more parameters listed above in the time configuration information 1. In this way, signaling overheads can be reduced.

Specifically, the first device may obtain the time configuration information supported by the second device by exchanging the time configuration information with the second device. When determining that the time configuration information 2 is different from the time configuration information 1, the first device may determine whether to continue to obtain the prediction information 1. For example, the first device may determine to continue to obtain the prediction information 1, and may selectively apply the prediction information 1, or the first device may indicate the second device to send or obtain the prediction information 1 based on the time configuration information 2. Compared with a solution in which the second device does not send the prediction information 1 to the first device because the time configuration information 2 is different from the time configuration information 1, the foregoing solution may enable the first device to have an initiative to determine whether to continue to obtain the prediction information 1, that is, the first device may determine whether to continue to obtain the prediction information 1. Therefore, a probability that the first device receives expected prediction information can be effectively increased.

For example, when the time configuration information supported by the second device is different from the time configuration information configured by the first device, the first device may adjust the time configuration information supported by the second device to the time configuration information configured for the prediction information, so that the time configuration information configured by the first device for the prediction information is consistent with the time configuration information supported by the second device for the prediction information. Therefore, the second device can continue to send the prediction information to the first device.

In addition, the time configuration information about the prediction information 1 is exchanged with the second device. When the second device sends the prediction information 1 to the first device, the first device can determine time configuration information that the prediction information 1 actually corresponds to, and can properly process the prediction information 1. For example, when the first time configuration information 1 is different from the time configuration information 2 and the prediction information 1 has been obtained, the first device may choose to discard the prediction information 1, or selectively apply the prediction information 1; or when the time configuration information 1 is different from the time configuration information 2, and the prediction information 1 is not obtained, the first device may choose to re-request to obtain the prediction information 1 based on the time configuration information supported by the second device; or when the time configuration information 1 is different from the time configuration information 2, and the prediction information 1 is not obtained, the first device may choose to indicate the second device to stop reporting the prediction information 1; or the like. In this way, this application supports the first device in properly processing the prediction information.

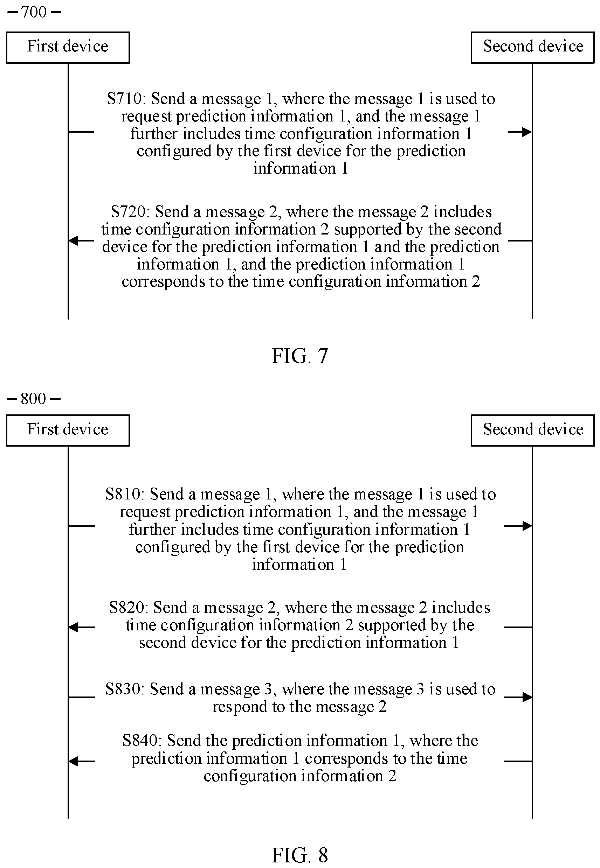

The following further describes the method shown in FIG. 5 with reference to FIG. 7 to FIG. 9.

It should be uniformly noted that the foregoing message 1 may include a prediction item list, and each prediction item in the prediction item list is prediction information. The message 1 may further include time configuration information corresponding to each prediction item. For ease of description, the following uses an example in which the message 1 includes one prediction item, that is, the prediction information 1, for description. However, a scenario in which the message 1 further includes another prediction item and corresponding time configuration information is not limited.

FIG. 7 is a schematic interaction flowchart of a communication method 700 according to an embodiment of this application. As shown in FIG. 7, the method 700 includes the following steps.

S710: A first device sends a message 1 to a second device.

Correspondingly, the second device receives the message 1.

S720: The second device sends a message 2 to the first device, where the message 2 includes time configuration information 2 supported by the second device for prediction information 1 and the prediction information 1, and the prediction information 1 corresponds to the time configuration information 2.

Correspondingly, the first device receives the message 2, and can determine that the prediction information 1 corresponds to the time configuration information 2.

For example, time configuration information 1 is different from the time configuration information 2. The time configuration information 1 includes a requested prediction time 1, a valid time 1, and a report time 1, and the time configuration information 2 includes an effective time 1, a valid time 2, and a report time 2. Except that the effective time 1 is different from the valid prediction time 1, other parameters may be the same. For example, the requested prediction time 1 is a time period [9:00, 9:30], the effective time 1 is a time period [9:00, 9:20], and the prediction information 1 is an activated UE quantity parameter. The first device determines that the first device obtains an activated UE quantity parameter that is in the time period [9:00, 9:20].

It should be noted that, that the prediction information 1 corresponds to the time configuration information 2 may be understood as that time configuration information actually corresponding to the prediction information 1 is the time configuration information 2 instead of the time configuration information 1.

After receiving the prediction information 1, the first device may apply all/a part of the prediction information 1, or may reconfigure time configuration information 3 (the time configuration information 3 may be the same as the time configuration information 2) for the prediction information 1, and resend the message 1 including the time configuration information 3 to the second device; or may send, to the second device, a message indicating to stop reporting the prediction information 1. This is not limited.

In conclusion, the first device and the second device may exchange the time configuration information about the prediction information 1. This helps the first device obtain the time configuration information supported by the second device for the prediction information 1, and can avoid a problem that the second device cannot send the prediction information 1 to the first device because the second device does not support the time configuration information 1, thereby supporting the first device in obtaining the prediction information 1.

The method 700 is described by using an example in which the second device sends the prediction information 1 to the first device. The second device may not send the prediction information 1 to the first device. To be specific, when the second device determines that the time configuration information 1 is not the time configuration information supported by the second device, the second device may send, to the first device, indication information indicating that the prediction information 1 cannot be sent. The indication information may carry a reason why the prediction information 1 cannot be sent. For example, the reason may be one or more of the following:
(1) only the activated UE quantity parameter that is in the prediction time period [9:00, 9:20] is supported;
(2) the activated UE quantity parameter that is in the time period [9:00, 9:30] can be reported in a next period/at a specific moment;
(3) the report time can be supported only at a specific time point/time segment (for example, 8:59);
(4) a current periodic report time/expected valid time/report time/requested prediction time is not supported; and
(5) a current periodic report time/expected valid time/report time/requested prediction time is unavailable.

It should be noted that the time period [9:00, 9:20] is merely used as an example for understanding, and may also be another time period, for example, a time period [9:20, 9:40]. Correspondingly, the foregoing activated UE quantity parameter is also used as an example for understanding, and may also be another parameter, for example, an average packet loss delay. This is not limited herein. Similarly, the specific numbers appearing in the following are merely used as examples for understanding, and are not used as final limitation.

In addition, a correspondence between the foregoing reason value and the prediction item is not limited, and one prediction item may correspond to a plurality of reasons, or one reason may correspond to a plurality of prediction items, or the like. This is not limited either.

Correspondingly, the first device may reconfigure the time configuration information 3 for the prediction information 1 based on the indication information, and resend the message 1 including the time configuration information 3 to the second device; or may send, to the second device, the message indicating to stop reporting the prediction information 1.

According to the foregoing solution, this application supports in avoiding a problem that the second device cannot send the prediction information 1 to the first device because the second device does not support the time configuration information 1, thereby increasing a probability that the first device obtains expected prediction information.

In addition, the message 2 carries the time configuration information supported by the second device for the prediction information 1, so that this application supports the first device in obtaining the time configuration that can be supported by the second device. Therefore, the first device can properly process the prediction information 1.

In the method 700, the message 1 may be an AI information request (AI information request) message, and the message 2 may be an AI information response message or an AI information update message. When the message 1 is the AI information request message, for specific descriptions of the message 1, refer to an existing protocol. When the message 2 is the AI information response message or the AI information update message, for specific descriptions of the message 2, refer to an existing protocol. In addition, this application supports the AI information response message or the AI information update message in including a time configuration information parameter supported by the second device for the prediction information 1, and a format of the parameter in the AI information response message or the AI information update message is not limited.

The method 700 is described by using an example in which the second device includes the prediction information 1 in the message 2. However, the second device may not include the prediction information 1 in the message 2. For details, refer to FIG. 8.

FIG. 8 is a schematic interaction flowchart of a communication method 800 according to an embodiment of this application. As shown in FIG. 8, the method 800 includes the following steps.

S810: A first device sends a message 1 to a second device.

Correspondingly, the second device receives the message 1.

Specifically, in addition to being used to request prediction information 1, the message 1 may be further used to request a plurality of pieces of prediction information. Correspondingly, the message 1 may further include corresponding time configuration information. For ease of description, the following uses an example in which the message 1 includes a prediction item list and a time configuration information list for description. Each prediction item in the prediction item list may be prediction information, and each piece of time configuration information in the time configuration information list one-to-one corresponds to the prediction item. Refer to Table 1. Content shown in Table 1 is merely used as an example for understanding, and is not used as final limitation.

**Table 1**

| Prediction item list | Time configuration information list |
|---|---|
| Prediction item 1 | Time configuration information a |
| Prediction item 2 | Time configuration information b |
| ... | ... |

As described in Table 1, the prediction item list includes the prediction item 1 and the prediction item 2, and the time configuration information list includes the time configuration information a and the time configuration information b. The time configuration information a corresponds to the prediction item 1, and the time configuration information b corresponds to the prediction item 2. "..." indicates content of another item. For descriptions of the time configuration information a and the time configuration information b, refer to the descriptions of the time configuration information 1. Details are not described again.

When the message 1 includes the prediction item list and the time configuration information list, the second device has time configuration information supported by the second device for each prediction item, and the time configuration information supported by the second device may be the same as time configuration information configured by the first device, or may be different from time configuration information configured by the first device. This is not limited.

S820: The second device sends a message 2 to the first device.

Correspondingly, the first device receives the message 2.

Specifically, the message 2 is a response to the message 1. For example, for the time configuration information a corresponding to the prediction item 1, the message 2 includes time configuration information supported by the second device for the prediction item 1; and for the time configuration information b corresponding to the prediction item 2, the message 2 includes time configuration information supported by the second device for the prediction item 2. In other words, the message 2 is a response of the second device to each piece of time configuration information in the time configuration information list included in the message 1 sent by the first device. For ease of description, the following uses an example in which the message 2 includes a prediction item list and a time configuration response information list for description. Each prediction item in the prediction item list may be prediction information, and each piece of time configuration response information in the time configuration response information list one-to-one corresponds to the prediction item. Refer to Table 2. Content shown in Table 2 is merely used as an example for understanding, and is not used as final limitation.

**Table 2**

| Prediction item list | Time configuration response information list |
|---|---|
| Prediction item 1 | Time configuration response information a |
| Prediction item 2 | Time configuration response information b |
| ... | ... |

As described in Table 2, the prediction item list includes the prediction item 1 and the prediction item 2, and the time configuration response information list includes the time configuration response information a and the time configuration response information b. The time configuration response information a corresponds to the prediction item 1, and the time configuration response information b corresponds to the prediction item 2. "..." indicates content of another item. The time configuration response information is used to respond to the corresponding time configuration information in Table 1. The time configuration response information a may be the same as the time configuration information a, or may be different from the time configuration information a, and the time configuration response information b may be the same as the time configuration information b, or may be different from the time configuration information b.

In a possible implementation, when the second device supports all of the time configuration information in the time configuration information list in the message 1, the message 2 may not carry the time configuration response information of the prediction item, that is, the first device may consider by default that the time configuration information supported by the second device for the prediction item is the same as the time configuration information configured by the first device for the prediction item.

In a possible implementation, when the second device supports a part of the time configuration information in the time configuration information list in the message 1, the message 2 may carry the time configuration response information of the prediction item, and the time configuration response information indicates whether the second device supports the time configuration information. For example, the message 2 may include a prediction item that supports a time configuration request and a prediction item that does not support the time configuration request. The prediction item that supports the time configuration request indicates that the time configuration information supported by the second device is the same as time configuration information that is in the time configuration information list and that corresponds to the prediction item, and may include a prediction item list and a time configuration support indicator. The prediction item that does not support the time configuration request indicates that the time configuration information supported by the second device is different from time configuration information that is in the time configuration information list and that corresponds to the prediction item, and may include a prediction item list, a time configuration nonsupport indicator, and a time configuration information list supported by the second device.

In a possible implementation, when the second device does not support all of the time configuration information in the time configuration information list in the message 1, the message 2 may carry the time configuration response information of the prediction item. For example, the message 2 may include the prediction item that does not support the time configuration request, and the prediction item that does not support the time configuration request may include a prediction item list, a time configuration nonsupport indicator, and a time configuration information list supported by the second device.

It should be noted that the message 1 may further include parameters such as a measurement identifier (ID), a device identifier, and a cell identifier. The measurement identifier indicates to associate with a measurement starting procedure (corresponding to a prediction item obtaining procedure). The device identifier indicates a device whose prediction information is obtained (in the method 800, the device identifier is the second device), and the cell identifier indicates a cell whose prediction information is obtained. For descriptions of parameters such as the measurement identifier, the device identifier, and the cell identifier, refer to an existing protocol. Details are not described again.

S830: The first device sends a message 3 to the second device, where the message 3 is used to respond to the message 2.

Correspondingly, the second device receives the message 3, and may determine, based on the message 3, that the prediction information 1 is obtained based on time configuration information 2. For descriptions of the message 3, refer to Table 3 and Table 4. Content shown in Table 3 and Table 4 is merely used as an example for understanding, and is not used as final limitation.

**Table 3**

| Time configuration response information list | Acknowledgment item list |
|---|---|
| Time configuration response information a | ACK |
| Time configuration response information b | NACK |
| ... | ... |

As described in Table 3, when the message 1 is used to request a plurality of pieces of prediction information, the message 3 may include the time configuration response information list and the acknowledgment item list. For example, the time configuration response information list includes the time configuration response information a and the time configuration response information b, and the acknowledgment item list includes the ACK and the NACK. The ACK indicates that the second device is agreed to obtain or send the prediction item 1 based on the time configuration response information a, and the NACK indicates that the second device is not agreed to obtain or send the prediction item b based on the time configuration response information b.

Correspondingly, the second device may determine, based on the prediction item list, a prediction item that may be delivered or obtained based on the time configuration response information supported by the second device. In addition, the first device may specifically indicate, to the second device, a parameter that is in the time configuration information and that may be used to send or obtain the prediction information 1.

**Table 4**

| Time configuration response information 2 | Acknowledgment item list |
|---|---|
| Parameter 1 | ACK |
| Parameter 2 | NACK |
| ... | ... |

As shown in Table 4, the time configuration response information 2 is used as an example for description. The message 3 may include the plurality of parameters in the time configuration response information 2 and the acknowledgment item list, for example, the parameter 1 (for example, an effective time 1) and the parameter 2 (for example, a report time 1), for example, the ACK and the NACK. The ACK indicates that the parameter 1 is agreed to be used, and the NACK indicates that the parameter 2 is not agreed to be used. The second device may obtain or send a corresponding prediction item based on content of the acknowledgment item list.

In a possible implementation, when the time configuration information 2 includes a plurality of parameters corresponding to a same time parameter, the message 3 may include one of the plurality of parameters. For example, the time configuration information 2 includes a report time 2, the report time 2 includes a parameter a (for example, a moment 8:52) and a parameter b (for example, a moment 8:55), and the message 3 may include the parameter b of the report time 2. Alternatively, the time configuration information 2 includes an effective time 1, the effective time 1 includes a parameter c (for example, a time segment [9:00, 9:10]) and a parameter d (for example, a time segment [9:10, 9:20]), and the message 3 may include a parameter b of the effective time 1. Alternatively, the time configuration information 2 includes a report time 2 and an effective time 1. The report time 2 includes a parameter a (for example, a moment 8:52) and a parameter b (for example, a moment 8:55). The effective time 1 includes a parameter c (for example, a time period [9:00, 9:10]) and a parameter d (for example, a time period [9:10, 9:20]). The message 3 may include the parameter b of the report time 2 and the parameter c of the effective time 1. In conclusion, a specific form of the message 3 is not limited in this embodiment of this application, provided that the message 3 is a response to the message 2.

In a possible implementation, the message 3 may further include one or more of the following:
a cell identifier, a prediction item list, and time configuration information that is supported by the second device and that corresponds to a part of prediction items. In this way, the second device may send the prediction information 1 to the first device based on the message 3.

In conclusion, the time configuration information in the message 3 may be a subset of the time configuration information in the message 2, for example, including a part of parameters.

For ease of description, the following uses an example in which the message 3 indicates that the first device agrees that the second device sends the prediction information 1 to the first device based on the time configuration information 2, that is, the time configuration information in the message 3 is the complete time configuration information 2, but another scenario is not limited.

If the first device may choose not to agree that the second device obtains the prediction information 1 based on the time configuration information 2, the first device may send, to the first device, information indicating to stop reporting the prediction information 1.

S840: The second device sends the prediction information 1 to the first device, where the prediction information 1 corresponds to the time configuration information 2.

Correspondingly, the first device receives the prediction information 1.

For descriptions of S840, refer to the descriptions of S720. Details are not described again.

In conclusion, the first device and the second device exchange the time configuration information about the prediction information, and when the first device and the second device reach an agreement, the second device sends the prediction information to the first device. Compared with a solution in which the second device does not send the prediction information to the first device because the second device does not support the time configuration information 1, the foregoing solution can effectively increase a probability that the first device obtains expected prediction information.

In the method 800, the message 1 may be an AI information request message, and the message 2 and the message 3 may be AI information response messages. When the message 1 is AI information request information, for specific descriptions of the message 1, refer to an existing protocol. When the message 2 and the message 3 are the AI information response messages, for specific descriptions of the message 2 and the message 3, refer to an existing protocol. In addition, this application supports the AI information response message in including a time configuration information parameter supported by the second device for the prediction information 1, and a format of the parameter in the AI information response message is not limited. In addition, the prediction information 1 may be carried in an AI information update message.

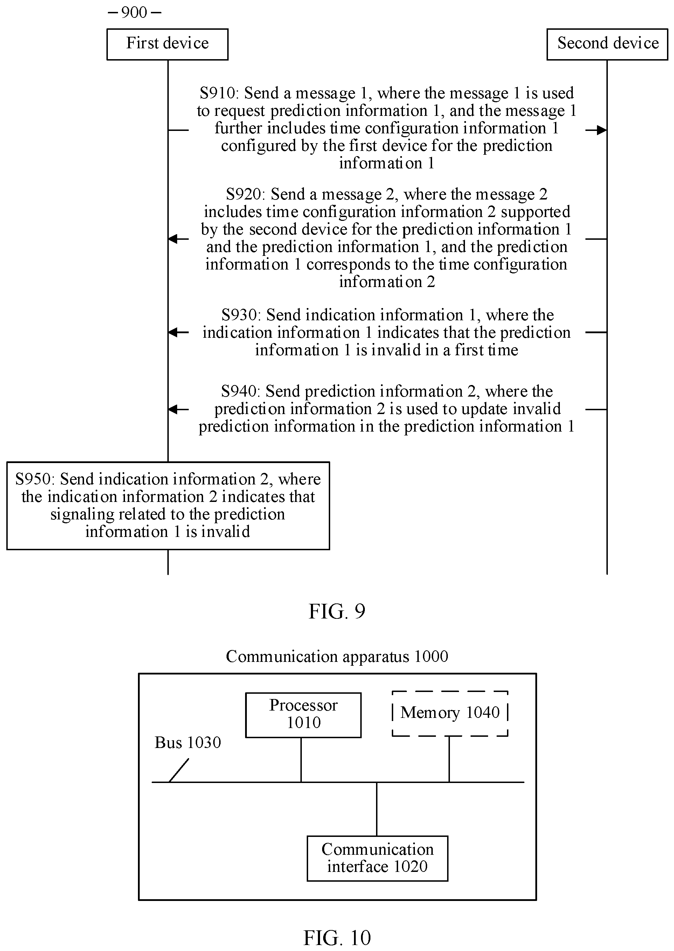

The method 700 and the method 800 describe content of the time configuration information that is of the prediction information 1 and that is exchanged between the first device and the second device. However, the prediction information 1 sent by the second device to the first device may include invalid prediction information, and the invalid prediction information brings a problem for the first device to perform processing based on the prediction information 1. Therefore, the second device needs to indicate to the first device that the prediction information 1 includes the invalid prediction information. The following further describes this with reference to FIG. 9.

FIG. 9 is a schematic interaction flowchart of a communication method 900 according to an embodiment of this application. As shown in FIG. 9, the method 900 includes the following steps.

S910: A first device sends a message 1 to a second device.

For specific descriptions, refer to the descriptions of S710. Details are not described again.

S920: The second device sends a message 2 to the first device.

For specific descriptions, refer to the descriptions of S720. Details are not described again.

S930: The second device sends indication information 1 (for example, first indication information) to the first device, where the indication information 1 indicates that the prediction information 1 is invalid in a first time.

Correspondingly, the first device receives the indication information 1, and determines, based on the indication information 1, that the prediction information 1 is invalid in the first time. The first time may be a valid time 2 or a report period interval 2.

Specifically, that the indication information 1 indicates that the prediction information 1 is invalid in the first time may be that the prediction information 1 includes invalid prediction information, or the prediction information 1 is invalid prediction information.

In a possible implementation, the indication information 1 may include one or more of the following:
a device identifier, a cell identifier, a measurement identifier, a time index, and an invalid reason.

For descriptions of the device identifier, the cell identifier, and the measurement identifier, refer to the foregoing descriptions. Details are not described again. The time index indicates a time corresponding to the invalid prediction information. When there are a plurality of requested prediction times, the time index may include a time index list 1 and a time index list 2, where the time index list 1 indicates a specific requested prediction time, and the time index list 2 indicates that prediction information corresponding to a time period in the requested prediction time is invalid. The invalid reason indicates a reason why the prediction information 1 is invalid. For example, a predicted value is inconsistent with an actual value.

It should be noted that, when the message 1 is used to request a plurality of pieces of prediction information, the indication information 1 may further include a prediction item invalid list, and the prediction item invalid list indicates a prediction item that is invalid (which may be indicated by using a bit, for example, an invalid prediction item is indicated by using a bit 0).

S940: The second device sends prediction information 2 (for example, second prediction information) to the first device, where the prediction information 2 is used to update invalid prediction information in the prediction information 1.

Correspondingly, the first device receives the prediction information 2. The first device may update the invalid prediction information in the prediction information 1 based on the prediction information 2. Specifically, the prediction information 2 may completely replace the prediction information 1, or may replace the invalid prediction information in the prediction information 1. This is not limited. When the prediction information 2 is used to replace the invalid prediction information in the prediction information 1, the indication information 1 may include information indicating the invalid prediction information in the prediction information 1. In this way, the first device may update or replace the invalid prediction information in the prediction information 1 based on the indication information 1 and the prediction information 2.

In a possible implementation, the prediction information 2 may include one or more of the following:
a device identifier, a cell identifier, a measurement identifier, a prediction result, a time index, and an update reason.

For descriptions of the device identifier, the cell identifier, and the measurement identifier, refer to the foregoing descriptions. Details are not described again. The time index indicates time information corresponding to prediction information that needs to be updated. When there are a plurality of requested prediction times, the time index may include a time index list 1 and a time index list 2, where the time index list 1 indicates a specific requested prediction time, and the time index list 2 indicates that prediction information corresponding to a time period in the requested prediction time needs to be updated. The prediction result is prediction information used for updating. The update reason indicates a reason why the prediction information 1 needs to be updated. For example, a predicted value is inconsistent with an actual value.

When the message 1 is used to request a plurality of pieces of prediction information, the prediction information 2 may further include a prediction item update list, and the prediction item update list indicates a prediction item that needs to be updated (which may be indicated by using a bit, for example, a prediction item that needs to be updated is indicated by using a bit 0).

S950: The first device sends indication information 2 (for example, second indication information), where the indication information 2 indicates that signaling related to the prediction information 1 is invalid.

Correspondingly, a device that interacts with the first device may receive the indication information 2, and may determine, based on the indication information 2, that the signaling that is sent by the first device and that is related to the prediction information 1 is invalid.

Specifically, if the first device has generated, based on the prediction information 1, an AI policy related to interaction with another device (for example, the first device has notified a third device that a terminal device 1 is to be handed over after 2 minutes), the first device needs to send the indication information 2 to the third device, where the indication information 2 indicates that handing over of the terminal device 1 after 2 minutes is invalid.

In a possible implementation, the indication information 2 may include one or more of the following: a device identifier, a cell identifier, a UE identifier, an AI policy expiration time, and an AI policy expiration type indication (for example, a handover request or an assistance calculation message).

Specifically, the device identifier indicates a device (for example, the third device) related to the signaling related to the prediction information 1, the cell identifier indicates a cell related to the signaling related to the prediction information 1, the UE identifier indicates a UE identifier (for example, the terminal device 1) related to the signaling related to the prediction information 1, the AI policy expiration time indicates a time related to the signaling related to the prediction information 1, and the AI policy expiration type indication indicates a specific type of the signaling related to the prediction information 1.

According to the foregoing solution, the first device can learn of, in a timely manner, that the prediction information 1 is invalid, so that the first device can be prevented from generating an invalid AI policy based on the invalid prediction information, thereby improving AI service precision of the first device.

It should be noted that, S930 and S940 may be performed simultaneously, or may not be performed simultaneously. This is not limited herein.

In the method 900, after the first device receives the indication information 1, the first device may choose to discard all/a part of the invalid prediction information in the prediction information 1. After the first device receives the prediction information 2, the first device may replace all/a part of the invalid prediction information in the prediction information 1, and regenerate a related AI policy based on updated prediction information 1. Alternatively, the first device may modify the report period. For example, the message 1 is resent, and the message 1 includes a parameter, for example, a modified report period interval or a modified valid time 1. Alternatively, the first device sends, to the second device, information indicating to stop reporting the prediction information 1, that is, resends the message 1 to indicate to stop reporting the prediction information 1.

In the method 900, the time configuration information 1 may be the same as the time configuration information 2, or may be different from the time configuration information 2. This is not limited.

It should be noted that a part of steps in S910 to S950 may exist independently. For example, the method 900 includes only S910 to S930, or the method 900 includes only S910 to S940, or the method 900 includes S910 to S950, or the method 900 includes only S910, S920, and S930. This is not limited herein.

In addition, the method 700 to the method 900 may be used as independent embodiments, or may be combined. For example, the method 700 and the method 900 are combined to form a new embodiment, and the method 800 and the method 900 are combined to form a new embodiment. This is not limited.

The following describes apparatus embodiments corresponding to the method embodiments of this application. The following briefly describes only the apparatus. For specific implementation steps and details of the solution, refer to the foregoing method embodiments.

To implement functions in the methods provided in this application, both a terminal device and a network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 10 is a block diagram of a communication apparatus 1000 according to an embodiment of this application. The communication apparatus 1000 includes a processor 1010 and a communication interface 1020. The processor 1010 and the communication interface 1020 may be connected to each other through a bus 1030. The communication apparatus 1000 may be a first device, or may be a second device.

Optionally, the communication apparatus 1000 may further include a memory 1040. The memory 1040 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 1040 is configured for related instructions and data.

The processor 1010 may be one or more central processing units (central processing units, CPUs). When the processor 1010 is one CPU, the CPU may be a single-core CPU, or may be a multi-core CPU. The processor 1010 may be a signal processor, a chip, another integrated circuit that can implement the methods in this application, or a part of circuits that are in the foregoing processor, chip, or integrated circuit and that are configured to perform a processing function. In addition, the communication interface 1020 may alternatively be an input/output interface. The input/output interface is configured to input or output a signal or data, or may be an input/output circuit.

When the communication apparatus 1000 is the first device, for example, the processor 1010 is configured to perform the following operations: sending a message 1 to the second device, receiving a message 2 from the second device, and the like.

When the communication apparatus 1000 is the second device, for example, the processor 1010 is configured to perform the following operations: receiving a message 1 from the first device, sending a message 2 to the first device, and the like.

The content is merely used as an example for description. When the communication apparatus 1000 is the first device or the second device, the communication apparatus 1000 is responsible for performing the method or steps related to the first device or the second device in the foregoing method embodiments.

It may be understood that when the communication apparatus 1000 is the first device or the second device, the communication interface 1020 may also be referred to as a transceiver. The foregoing descriptions are merely examples. For specific content, refer to the content shown in the foregoing method embodiments. For implementations of the operations in FIG. 10, refer to the corresponding descriptions of the method embodiments shown in FIG. 5 to FIG. 9.

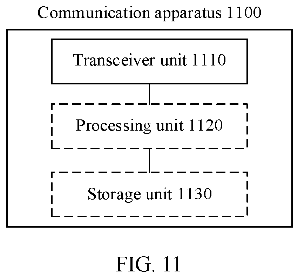

FIG. 11 is a block diagram of a communication apparatus 1100 according to an embodiment of this application. The communication apparatus 1100 may be a first device or a second device, or may be a chip or a module in a first device or a second device, and is configured to implement the method in the foregoing embodiments. The communication apparatus 1100 includes a transceiver unit 1110. The following describes the transceiver unit 1110 by using an example.

The transceiver unit 1110 may include a sending unit and a receiving unit. The sending unit is configured to perform a sending action of the communication apparatus, and the receiving unit is configured to perform a receiving action of the communication apparatus. For ease of description, in embodiment of this application, the sending unit and the receiving unit are combined into one transceiver unit. This is described herein once for all, and details are not described below again.

When the communication apparatus 1100 is the first device, for example, the transceiver unit 1110 is configured to send a message 1 to the second device. The transceiver unit 1110 is further configured to receive a message 2 and the like from the second device.

Optionally, the communication apparatus 1100 may further include a processing unit 1120, configured to perform content related to steps such as processing and coordination of the first device.

When the communication apparatus 1100 is the second device, for example, the transceiver unit 1110 is configured to send a message 2 to the first device.

Optionally, the communication apparatus 1100 may further include a processing unit 1120, configured to perform content related to steps such as processing and coordination of the second device.

The content is merely used as an example for description. When the communication apparatus 1100 is the first device or the second device, the communication apparatus 1100 is responsible for performing the method or steps related to the first device or the second device in the foregoing method embodiments.

Optionally, the communication apparatus 1100 further includes a storage unit 1130. The storage unit 1130 is configured to store a program or code used to perform the foregoing method.

The apparatus embodiments shown in FIG. 10 and FIG. 11 are used for implementing the content described in FIG. 5 to FIG. 9. For specific execution steps and methods of the apparatuses shown in FIG. 10 and FIG. 11, refer to the content described in the foregoing method embodiments.

This application further provides a chip, including a processor, configured to invoke instructions from a memory and run the instructions stored in the memory, to cause a communication device on which the chip is installed to perform the method in the foregoing examples.

This application further provides another chip, including an input interface, an output interface, and a processor. The input interface, the output interface, and the processor are connected to each other through an internal connection path. The processor is configured to execute code in a memory. When the code is executed, the processor is configured to perform the method in the foregoing examples. Optionally, the chip further includes the memory. The memory is configured to store a computer program or code.

This application further provides a processor, configured to be coupled to a memory, and configured to perform a method and a function of the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiment is implemented.

Another embodiment of this application provides a computer-readable storage medium. The computer-readable storage medium stores a computer program. When the computer program is executed by a computer, the method in the foregoing embodiments is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, the disclosed system, apparatuses, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, wherein the method is applied to a first device, and the method comprises:
sending a first message to a second device, wherein the first message is used to request first prediction information, and the first message comprises first time configuration information configured by the first device for the first prediction information; and
receiving a second message from the second device, wherein the second message comprises second time configuration information supported by the second device for the first prediction information, and the first time configuration information is different from the second time configuration information.

2. The method according to claim 1, wherein the method further comprises:
sending a third message to the second device, wherein the third message is used to respond to the second message; and
receiving the first prediction information from the second device, wherein the first prediction information corresponds to the second time configuration information.

3. The method according to claim 1, wherein the second message further comprises the first prediction information, and the first prediction information corresponds to the second time configuration information.

4. The method according to any one of claims 1 to 3, wherein the first time configuration information comprises one or more of the following:
a first valid time, a requested prediction time, a first report time, or a first report period interval.

5. The method according to any one of claims 1 to 4, wherein the second time configuration information comprises one or more of the following:
a second valid time, a second report time, an effective time, or a second report period interval.

6. The method according to claim 5, wherein the method further comprises:
receiving first indication information from the second device, wherein the first indication information indicates that the first prediction information is invalid in a first time, and the first time is the second valid time or the second report period interval.

7. The method according to claim 6, wherein the method further comprises:
receiving second prediction information from the second device, wherein the second prediction information is used to update invalid prediction information in the first prediction information.

8. The method according to claim 6 or 7, wherein the method further comprises:
sending second indication information, wherein the second indication information indicates that signaling related to the first prediction information is invalid.

9. A communication method, wherein the method is applied to a second device, and the method comprises:
receiving a first message from a first device, wherein the first message is used to request first prediction information, and the first message comprises first time configuration information configured by the first device for the first prediction information; and
sending a second message to the first device, wherein the second message comprises second time configuration information supported by the second device for the first prediction information, and the first time configuration information is different from the second time configuration information.

10. The method according to claim 9, wherein the method further comprises:
receiving a third message from the first device, wherein the third message is used to respond to the second message; and
sending the first prediction information to the first device, wherein the first prediction information corresponds to the second time configuration information.

11. The method according to claim 10, wherein the second message further comprises the first prediction information, and the first prediction information corresponds to the second time configuration information.

12. The method according to any one of claims 9 to 11, wherein the first time configuration information comprises one or more of the following:
a first valid time, a requested prediction time, a first report time, or a first report period interval.

13. The method according to any one of claims 9 to 12, wherein the second time configuration information comprises one or more of the following:
a second valid time, a second report time, an effective time, or a second report period interval.

14. The method according to claim 13, wherein the method further comprises:
sending first indication information to the first device, wherein the first indication information indicates that the first prediction information is invalid in a first time, and the first time is the second valid time or the second report period interval.

15. The method according to claim 14, wherein the method further comprises:
sending second prediction information to the first device, wherein the second prediction information is used to update invalid prediction information in the first prediction information.

16. A communication apparatus, comprising a processor, wherein the processor is configured to: by executing a computer program or instructions or through a logic circuit,
cause the communication apparatus to perform the method according to any one of claims 1 to 8, or
cause the communication apparatus to perform the method according to any one of claims 9 to 15.

17. The apparatus according to claim 16, wherein the communication apparatus further comprises a memory, and the memory is configured to store the computer program or the instructions.

18. The apparatus according to claim 16 or 17, wherein the communication apparatus further comprises a communication interface, and the communication interface is configured to input and/or output a signal.

19. A communication apparatus, comprising a processing circuit and an input/output interface, wherein the input/output interface is configured to input and/or output a signal; and
the processing circuit is configured to perform the method according to any one of claims 1 to 8, or
the processing circuit is configured to perform the method according to any one of claims 9 to 15.

20. A computer-readable storage medium, wherein the computer-readable storage medium stores a computer program or instructions, and when the computer program or the instructions are run on a computer,
the method according to any one of claims 1 to 8 is performed, or
the method according to any one of claims 9 to 15 is performed.

21. A computer program product, comprising instructions, wherein when the instructions are run on a computer,
the method according to any one of claims 1 to 8 is performed, or
the method according to any one of claims 9 to 15 is performed.
